# EUROPEAN PATENT SPECIFICATION

(11) **EP 1 437 024 B1**
(45) Date of publication and mention of the grant of the patent: **03.11.2010**
(21) Application number: 02773106.6
(22) Date of filing: 27.09.2002
(51) Int. Cl.: H04W 12/10, H04L 9/32

(54) **METHOD AND ARRANGEMENT IN A COMMUNICATIONS NETWORK**
VERFAHREN UND ANORNDUNG IN EINEM KOMMUNIKATIONSNETZ
PROCEDE ET DISPOSITIF POUR RESEAU DE TELECOMMUNICATIONS

(30) Priority: 19.10.2001 SE 0103485
(43) Date of publication of application: 14.07.2004
(73) Proprietor: SmartTrust Systems Oy, 00511 Helsinki (FI)
(72) Inventor: THORSTENSSON, Tommy, S-167 38 Bromma (SE); REINHOLDSEN, Örjan, S-187 76 Täby (SE); SELLIN, Lars-Erik, S-125 35 Älvsjö (SE); KILANDER, Ulf, S-135 53 Tyresö (SE)
(74) Representative: Söderman, Päivi Karin Lisbeth
(86) International application number: PCT/SE2002/001765
(87) International publication number: WO 2003/034772

(56) References cited:
- EP-A2- 0 782 296
- WO-A1-97/12460
- WO-A1-99/22486
- US-A- 5 970 475
- US-B1- 6 223 291

## Description

### FIELD OF THE INVENTION

The present invention relates to a method and arrangement in a communications system in accordance with the preambles of the independent claims. More specifically it relates to digital signatures sent over bandwidth restricted connections.

### BACKGROUND OF THE INVENTION

To attain security in open networks, several security solutions have appeared. One example is Public key Infrastructure (PKI). PKI is a system to distribute and check keys that can be used to authenticate users, sign information and encrypt information. In a PKI system, two associated keys are used in connection with protecting information. One important feature of PKI systems is that it is computationally unfeasible to use knowledge of one of the keys to deduce the other key, such keys being called asymmetric keys. In a typical PKI system, a set of two such keys are assigned to an owner. One of the keys is maintained private while the other is freely published. When the keys are used for encryption of information, the information is encrypted with the public key and only the owner having the private key can decrypt it. As only the owner possesses the private key, the keys can be used for digital signatures when used in the opposite way. Thus, when the keys are used for signing, the information is encrypted with the private key by the owner and the signature can be verified by the public key.

A PKI distributes one or several public keys. A central element of a Public Key Infrastructure are public key certificates, which are needed to provide assurance of the validity of public keys. A trusted third party issues certificates and is called a certification authority (CA). The CA uses its good name to guarantee the correctness of a public key by signing a certificate including the public key and other information.

According to International Organization for Standardization (ISO) 7498-2, a digital signature is data appended to, or cryptographic transformation of a data unit that allows a recipient of the data unit to prove the source and integrity of the data unit and protect against forgery, e.g. by the recipient.

A recipient of a digitally signed message (relying party), in this document referred to as the receiver, is someone that wants to prove the source and integrity of the message and verify the sender of that particular message. With a trusted third party in a PKI the recipient may know that the public key provided to him/her is the right one and is corresponding to the senders identity. This is assured by the trusted third party through a Certificate.

Digital signatures made by means of said public key processes, are generated by means of the private key with a mathematical algorithm and the signature can be verified with the associated public key. The private key can be controlled only by the signer that owns the key so that nobody is able to sign in the name of the signer. The public key, on the other hand may be published so that anybody can verify the signature. The private key is usually protected through a Personal Identification Number (PIN) so that for making a signature, knowledge of the PIN and possession of the private key are required.

The digital signatures can be generated in a computer, e.g. in a PC, by means of computer programs consisting of such a mathematical algorithm. The private key is usually stored on a hard disk or a diskette and downloaded into the main memory for generating the signature. Mostly, the private key is stored encoded and protected via a PIN, which the owner has to enter when signing by means of the computer program. This will ensure that only the owner of the private key can use the private key for signing. Since no additional software is required, this process is advantageous in regard to costs.

Digital signatures are widely used in the fixed Internet world, which is a public open network.. One way to use digital signing is to send a signing request from a signature recipient to a computer of a user. The user receives the request and signs it by using his private key, e.g. in a smart card within the computer, containing the necessary private key. The signature is sent back to the signature recipient in a message. Optionally the client may attach the user's certificate to the message sent back to the signature recipient.

The use of digital signatures in the mobile Internet word or other public network is becoming more and more common. The International publication WO 9922486 shows a process for digital signing of a message and describes the use of a mobile radio telephone net for transmitting signed messages. However, this document is silent about attaching certificates to such a message. EP 0 782 296 presents a solution for fetching certificates to a user agent from a directory. WO 97 12460 presents a document authentication system and method that implement digital signing for electronic transmission and retrieval of authenticated documents thereby identifying the originator of an electronic document.

A certificate comprises lots of information and requires a great deal of bandwidth when transferred and a lot of memory capacity for storing. As the storage capacity of mobile devices is limited and the bandwidth of the radio communication channel it uses for the transfer to the recipient is restricted there are problems with storing the certificate and transferring the digital signature and added certificate over radio connection to the recipient when using a mobile device to perform the digital signing, adding the correspondent certificate to it and transfer it to the recipient that requested the digital signature.

### SUMMARY OF THE INVENTION

The object of the present invention is to provide a way to enable a mobile Internet or other public network user to use his/her mobile device for performing digital signing of data suitable for being transferred over a bandwidth restricted radio link to a receiver such as a signature recipient application, e.g. a payment server or similar.

The problem is solved by a method having the features of claim 1 and a certificate agent having the features of claim 7.

The method, comprising the steps of transferring a digital signature over the radio access network to the gateway, retrieving a certificate associated to the specific mobile device by means of an agent associated to the gateway, attaching said certificate to the digital signature by means of said agent; and forwarding said digital signature and attached certificate over the Internet or other public network to the receiver, makes it possible to transfer the digital signature without the certificate over the bandwidth restricted radio link.

Thanks to that the agent, associated to the gateway, has access to a directory wherein certificates are stored and that the agent has means for retrieving a certificate associated to a specific mobile device and attach it to the digital signature when transferring it on to the receiver, associated certificates do not have to be transferred over the bandwidth restricted radio link.

Preferred embodiments are shown in the dependent claims.

An advantage of the present invention is that certificates do not have to be stored on a signature client with limited storage capacity, nor transmitted over a communication channel with restricted bandwidth and receivers may still receive digital signatures with certificates attached in the same way as receiving digital signatures from fixed Internet or other public network clients with sufficient storage capacity and bandwidth.

### BRIEF DESCRIPTION OF THE DRAWINGS

- **Figure 1**: is a block diagram illustrating an exemplary digital signature system according to the present invention.
- **Figure 2**: is a block diagram depicting a mobile device according to the present invention.
- **Figure 3**: is a signalling sequence diagram showing an example of the signing method according to the present invention.

### DETAILED DESCRIPTION OF PREFERRED EMBODIMENTS

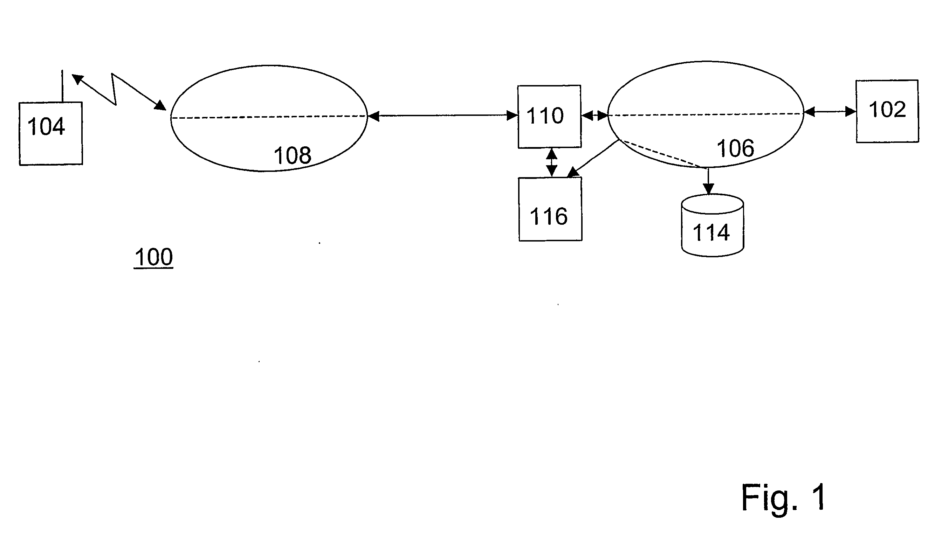

**Figure 1** is a block diagram illustrating an exemplary digital signature system 100 wherein a receiver such as a signature recipient application 102 wishes to ensure that a mobile end-user is who he/she claims to be. The system comprises a mobile device 104 such as e.g. a Mobile Station, adapted to be used by an end-user. In this example the mobile device 104 is accessible to the public network Internet 106 over a mobile access network 108 and via a wireless public network gateway i.e. in this example a wireless Internet gateway 110 constituting an entry into the public network, i.e. in this example the Internet 106.

The digital signature system 100 uses asymmetric cryptography, as being part of a PKI, for performing digital signatures. A pair of keys, consisting of a private key and a public key, is assigned to the user. The key pair is associated to a certificate, e.g. a X.509 certificate, through a certification process, whereby the public key is bound to an identity and thereby also the private key. X.509 is a standard by the International Telecommunications Union (ITU) specifying the contents of a digital certificate. The certificate issuing in a PKI is performed by a CA, Certificate Authority. Hence, the certificate is a trusted source for the RECEIVER to receive the signer identity or other certified information. A mobile user identity may be e.g. a name, birthday number, Mobile Station International ISDN Number (MSISDN) and/or Integrated Circuit Card Identification number (ICCID).

### The receiver

The receiver may for example be an internet bank application, a payment server or any application in the need of authentication (ensuring the identity of another party) or non-repudiation (preventing the denial of previous action). The receiver 102 is connectable to the Internet 106 and is able to communicate with the mobile device 102 of the end user. The receiver 102 is typically implemented as a software application, such as e.g. an internet web server application, running on a computer hardware. The receiver 102 has the ability to verify the digital signature.

### The mobile device

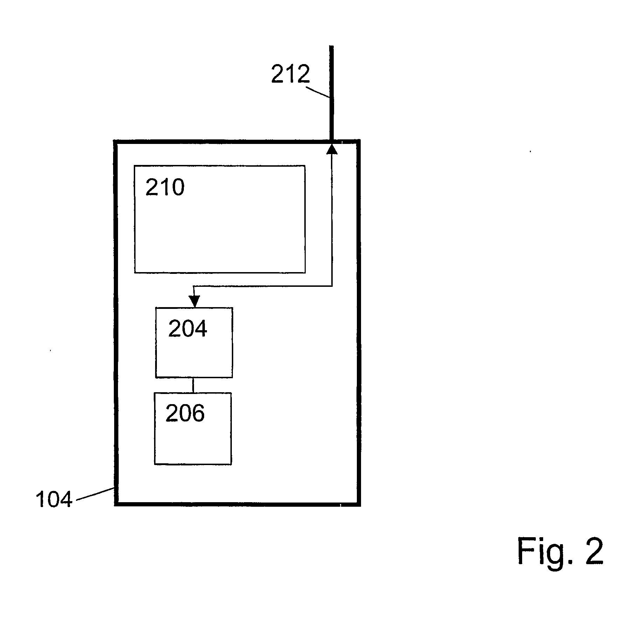

The mobile device 104, depicted in **Figure 2**, may be a mobile station, a pager, a Personal Digital Assistant (PDA), etc. that the user wishes to use for proving for the receiver that he/she is who he/she claims to be, or ensuring the commitment of an action such as signing a payment transaction. The mobile device 104 comprises a transmitting and a receiving means 212 for radio communication with mobile access network 108. The mobile device 104 comprises a client software 204 such as e.g. a WAP User Agent or wireless Internet browser which may be placed on e.g. the mobile equipment or a smart card of the mobile device 104, which may be a SIM card if the mobile device 104 is a GSM Mobile Station. The client software 204 is adapted for communicating with the mobile Internet gateway 110. The mobile device 104 further comprises a signing means 206 with the ability to perform digital signatures by means of mathematical algorithms on data sent to the mobile device 104. The signing means 206 and the user's private key which e.g. is used for signing of data, is preferably located in a tamper proof device such as a smart card. The mobile device 104 further comprises a displayer 210 wherein messages to be signed may be displayed and input means, e.g. a keyboard, by means of which the user may enter a PIN code for access to the private key for performing the signature.

### The wireless public network gateway and the agent

Referring to Figure 1, the wireless internet gateway 110, from now on called the gateway, is the entry to the public network, in this example the Internet 106, for the mobile device 104 or more specific the mobile station based client software 204 as shown in Figure 2. The mobile client 204 communicates with a server within the gateway 110. According to the present invention a so-called certificate agent 116 is associated to the gateway 110. This agent is adapted to assisting the mobile device 104, in its performance of the digital signature procedure, by handling certificates. The agent 116 is able to access a directory 114, e.g. via the Internet, which directory 114 contains certificates, each of them associated to a mobile user e.g. by means of the identity of the mobile device 104 or the identity of the smart card of the mobile device 104. More than one certificate may be associated to one mobile device. The certificate(s) are put into the directory by the Certificate Authority when issuing the certificate(s). This is however outside the scope of this document.

The directory 114 may be a X.500 directory accessed by means of a X.500 directory protocol (X.500 is a Directory Standard defined by ISO and the ITU) or a Lightweight Directory Access Protocol (LDAP) (defined in RFC 2251).

Upon receipt in the gateway 110 of a signed message on its way from the user to the receiver 102, the signed message is forwarded to the agent 116. The agent 116 then retrieves the specific mobile user certificate in the directory 114 by matching a user identity, such as the Mobile Station International ISDN Number (MSISDN) and/or Integrated Circuit Card Identification number (ICCID), as a search criteria. The agent 116 attaches the certificate(s) to the signed message, returns the message back to the gateway that forwards it to the receiver 102.

### The cryptographic message

The digital signature as well as certificates may be contained within a cryptographic message structure such as e.g. PCKS#7, referred to in RFC 2315 as Cryptographic Message Syntax Version 1.5. (RFC is short for Request for Comments, a series of notes about the Internet.)

### Signing procedure

Referring to Figure 1, an exemplary scenario could be a mobile user that wishes to e.g. buy a CD at a web site or pay a bill in an Internet bank.. The receiver 102 requests for a signature from the mobile device 104 of the user to ensure that a mobile end-user is who he/she claims to be. The user signs the message e.g. by means of the smart card of the mobile device 104. Instead of transferring the associated certificate from the mobile device 104 to the receiver 102 over a radio carrier with limited bandwidth each time a signing is performed as in prior art, the certificate is in the invention attached to the digital signature created on the mobile device, by the certificate agent 116 associated to the wireless Internet gateway . The completed signature is then forwarded to the receiver 102 which verifies it.

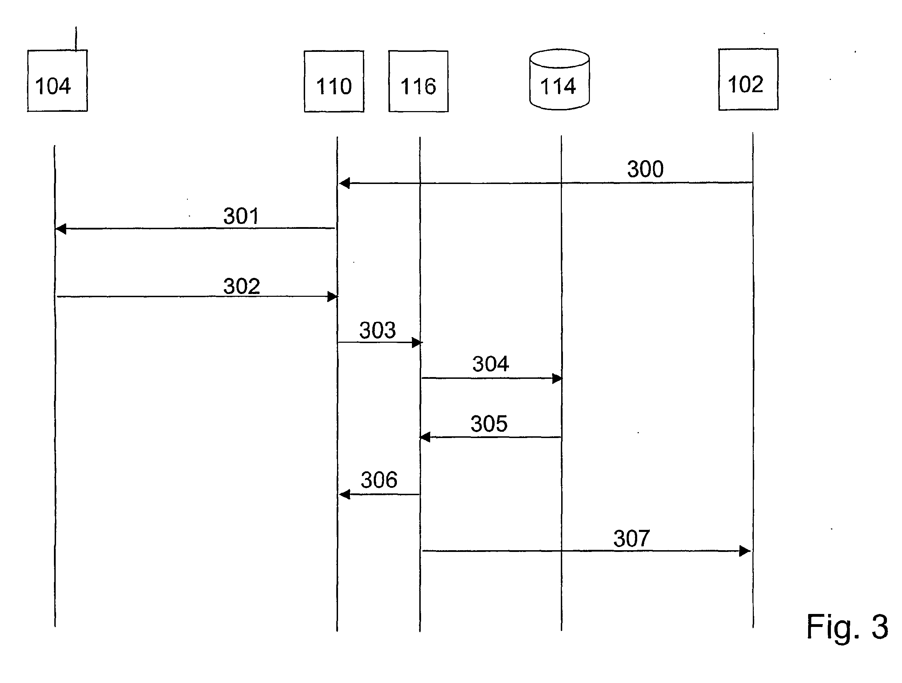

The signing method according to the present invention will now be described more in detail referring to the signalling diagram in **Figure 3****.**

The method comprises the following steps:
- Step 300: For the receiver 102 to be able to receive a digital signature from the mobile user, the receiver 102 sends a signing request message such as a message in a predefined and agreed protocol including a calling mechanism to the signature capability of the mobile device. The message is sent to the mobile user, i.e. to the mobile client 204 within the user's mobile device 104 as referred to in figure 2, via the gateway 110. The receiver 102 may also add Instructions/parameters for the agent 116 indicating what service to be performed. The possible instructions/parameters are embedded in the signature request message together with the signature request as well as in a subsequent message from the mobile device 104 to the gateway 110 together with the digital signature. The agent 116 will later in step 306 act in accordance with the Instructions/parameters.
Example of input parameters are:
- What type of output format of the cryptographic message is requested, e.g. PKCS#7 or WAP SignedString?
- Should the content be sent back to the receiver 102 with the PKCS#7 message?
- Step 301: The gateway 110 receives the message and forwards it to the signing means 206 within the mobile device 104.
- Step 302: The mobile device 104 receives the signature request message. The signing means 206 may display the text to be signed in the displayer 210 of the mobile device 104 and prompting the user for his/her PIN. The user enters his/her signing Personal Identification Number (PIN) to the signing means 206 by means of the input means. The signing means 206 obtains the PIN and verifies the PIN. If the correct PIN is entered, the signing means 206 is allowed to access the private key for performing the cryptographic calculation forming the digital signature. The signing means 206 returns the digital signature to the mobile client software 204 which in turn sends the digital signature over the bandwidth restricted mobile access network 108 to the gateway 110, possibly together with parameters provided in the original message from the receiver 102. The digital signature is transferred in a message.
- Step 303: The gateway 110 receives the digital signature message and relays it to the agent 116.
- Step 304: After receiving the digital signature message, the agent 116 accesses the directory 114.
- Step 305: It retrieves the certificate or certificates of the specific user by means of e.g. an identity of the mobile device 104 or the identity of the smart card such as Mobile Station International ISDN Number (MSISDN) or Integrated Circuit Card Identification number (ICCID), from which the signature carrying message came.
- Step 306: If parameters/instructions is included in the message, the agent 116 performs different operations in accordance with these parameters/instructions. One typical instruction would be that the agent 116 attaches the certificates and creates a PKCS#7 message structure containing the certificate and the digital signature. The new message structure, e.g. PKSC#7, is passed back to the gateway 110. If a user has multiple certificates, all certificates may be sent.
- Step 307: The gateway 110 forwards the signature and certificate, comprised in a message to the receiver 102.

The method is implemented by means of a computer program product comprising the software code means for performing the steps of the method. The computer program product is run on a computer placed in the gateway domain and implements a certificate handling entity within the digital signature system. The computer program is loaded directly or from a computer usable medium, such as a floppy disc, a CD, the Internet etc.

The present invention is not limited to the above-described preferred embodiments. Various alternatives, modifications and equivalents may be used. Therefore, the above embodiments should not be taken as limiting the scope of the invention, which is defined by the appending claims.

## Claims

1. Method for performing a digital signature by means of a mobile device (104), which signature is to be transferred from the mobile device (104) via a mobile access network (108), a wireless public network gateway (110) and a public network (106) to a receiver (102), the method comprising the steps of:
- *creating* (305) a digital signature within the mobile device (104);
- *transferring* (306) the digital signature over the mobile access network (108), to the gateway (110);
the method is **characterised by** comprising the further steps of:
- *retrieving* (307) a certificate associated to the specific mobile device (104) in an agent (116) associated to the gateway (110); said agent (116) *accessing* a directory (114) adapted for storing certificates associated to mobile devices;
- *attaching* (307) said certificate to the digital signature by means of said agent (116);
- *forwarding* (308) said digital signature and attached certificate over the public network to the receiver (102).

2. The method according to claim 1, **characterised in that** it comprises the further step to be taken after the step of transferring (306) the digital signature over the mobile access network (108):
- the gateway (110) *relaying* the received digital signature to the agent (116) associated to the gateway (110).

3. The method according to claim 1, **characterised in that** the step of retrieving a certificate comprises the further step of:
- *identifying* the certificate associated to the specific mobile device (104) among the stored certificates within said directory (114) by means of an identity of the mobile device (104) or the identity of the smart card.

4. The method according to any of the claims 1-3, **characterised by** the further step of
- the agent (116) *creating* a PKCS#7 message structure containing said certificate and the digital signature before forwarding it to the receiver (102).

5. A computer program product directly loadable into the internal memory of a processing means within a computer placed in a wireless public network gateway domain, comprising the software code means for performing the steps of the method of any of the claims 1-4, the method being performed for a digital signature by means of a mobile device (104), which signature is to be transferred from the mobile device (104) via a mobile access network (108), a wireless public network gateway (110) and a public network (106) to a receiver (102), the method comprising the steps of:
- *creating* (305) a digital signature within the mobile device (104);
- *transferring* (306) the digital signature over the mobile access network (108), to the gateway (110);
- *retrieving* (307) a certificate associated to the specific mobile device (104) in an agent (116) associated to the gateway (110); said agent (116) *accessing* a directory (114) adapted for storing certificates associated to mobile devices;
- *attaching* (307) said certificate to the digital signature by means of said agent (116);
- *forwarding* (308) said digital signature and attached certificate over the public network to the receiver (102).

6. A computer program product stored on a computer usable medium, comprising readable program for causing a processing means in a computer placed in the gateway domain, to control an execution of the steps of any the method of the claims 1-4, the method being performed for a digital signature by means of a mobile device (104), which signature is to be transferred from the mobile device (104) via a mobile access network (108), a wireless public network gateway (110) and a public network (106) to a receiver (102), the method comprising the steps of:
- *creating* (305) a digital signature within the mobile device (104);
- *transferring* (306) the digital signature over the mobile access network (108), to the gateway (110);
- *retrieving* (307) a certificate associated to the specific mobile device (104) in an agent (116) associated to the gateway (110); said agent (116) *accessing* a directory (114) adapted for storing certificates associated to mobile devices;
- *attaching* (307) said certificate to the digital signature by means of said agent (116);
- *forwarding* (308) said digital signature and attached certificate over the public network to the receiver (102).

7. A certificate agent (116) for assisting a mobile device (104) to perform a digital signature to be sent to a receiver (102), via a mobile access network (108), a wireless public network gateway (110) and a public network, the agent (116) being associated to the wireless public network gateway (110) and comprising means for receiving the digital signature sent from the mobile device (104) over the mobile access network (108) to the gateway (110), **characterised in that** the agent (116) further comprises:
- means for accessing a directory (114) adapted for storing certificates associated to mobile devices;
- means for retrieving a certificate associated to the specific mobile device (104) from said directory (114);
- means for attaching said certificate to the digital signature; and
- means for forwarding said digital signature and attached certificate via the gateway (110) and over the public network (106) to the receiver (102).

8. The agent (116) according to claim 7, **characterised in that** it comprises:
- means for identifying the certificate associated to the specific mobile device (104) among the stored certificates within the directory (114) by means of an identity of the mobile device (104) or the identity of the smart card.

9. The agent (116) according to any of the claims 7-8, **characterised in that** it comprises:
- means for creating a PKCS#7 message structure containing said certificate and the digital signature before forwarding it to the receiver (102).

## Patentansprüche

1. Verfahren zur Durchführung einer digitalen Signatur mittels einer mobilen Vorrichtung (104), welche Signatur von der mobilen Vorrichtung (104) über ein mobiles Zugangsnetzwerk (108), ein drahtloses öffentliches Netzwerk-Gateway (110) und ein öffentliches Netzwerk (106) einem Empfänger (102) übermittelt werden soll, welches Verfahren folgende Schritte umfasst,
- Erzeugen (305) einer digitalen Signatur innerhalb der mobilen Vorrichtung (104);
- Übermitteln (306) der digitalen Signatur über das mobile Zugangsnetzwerk (108), zum Gateway (110);
welches Verfahren **dadurch gekennzeichnet ist, dass** es als weitere Schritte umfasst:
- Abfragen (307) eines, der bestimmten mobilen Vorrichtung (104) zugeordneten Zertifikats in einem Agenten (116), der dem Gateway (110) zugeordnet ist; welcher Agent (116) auf ein Verzeichnis (114) zugreift, das für die Speicherung von mobilen Vorrichtungen zugeordneten Zertifikaten geeignet ist;
- Anhängen (307) des genannten Zertifikats mittels des genannten Agenten (116) an die digitale Signatur;
- Weiterleitung (308) der genannten digitalen Signatur und des angehängten Zertifikats über das öffentliche Netzwerk zum Empfänger (102).

2. Verfahren nach Anspruch 1, **dadurch gekennzeichnet, dass** es als nach dem Schritt zur Übertragung (306) der digitalen Signatur über das mobile Zugangsnetzwerk (108) zu nehmenden weiteren Schritt umfasst:
- Weitergabe der empfangenen digitalen Signatur durch das Gateway (110) zu dem dem Gateway (110) zugeordneten Agenten (116).

3. Verfahren nach Anspruch 1, **dadurch gekennzeichnet, dass** der Schritt zum Abfragen eines Zertifikats als weiteren Schritt umfasst:
- Identifizierung des der bestimmten Vorrichtung (104) zugeordneten Zertifikats unter den gespeicherten Zertifikaten innerhalb des genannten Verzeichnisses (114) mittels einer Identität der mobilen Vorrichtung (104) oder der Identität der Chipkarte.

4. Verfahren nach einem der Ansprüche 1 bis 3, **gekennzeichnet durch** den weiteren Schritt zur:
- Erzeugung eines PKCS#7-Nachrichtenformats **durch** den Agenten, das das Zertifikat und die digitale Signatur enthält, bevor sie zum Empfänger (102) weitergeleitet wird.

5. Computer-Programmprodukt, das direkt in den internen Speicher von Verarbeitungsmitteln innerhalb eines Computers ladbar ist, der in einer drahtlosen öffentlichen Netzwerk-Gateway-Domain platziert ist, das Software-Codemittel zur Durchführung der Schritte des Verfahrens nach einem der Ansprüche 1 bis 4 umfasst, welches Verfahren mittels einer mobilen Vorrichtung (104) für eine digitale Signatur durchgeführt wird, welche Signatur von der mobilen Vorrichtung (104) über ein mobiles Zugangsnetz (108), ein drahtloses öffentliches Netzwerk-Gateway (110) und ein öffentliches Netzwerk (106) einem Empfänger (102) übermittelt werden soll, welches Verfahren, folgende Schritte umfasst,
- Erzeugen (305) eine digitalen Signatur innerhalb der mobilen Vorrichtung (104);
- Übertragen (306) der digitalen Signatur über das mobile Zugangsnetzwerk (108) zum Gateway (110);
- Abrufen (307) eines Zertifikats, das der bestimmten mobilen Vorrichtung (104) zugeordnet ist, in einem dem Gateway (110) zugeordneten Agent (116); welcher Agent (116) auf ein Verzeichnis (114) zugreift, das für die Speicherung von der mobilen Vorrichtungen zugeordneten Zertifikaten geeignet ist;
- Anhängen (307) des genannten Zertifikats an die digitale Signatur mittels des genannten Agenten (116);
- Weiterleiten (308) der genannten digitalen Signatur und des angehängten Zertifikats über das öffentliche Netzwerk zum Empfänger (102).

6. Computerprogramm-Produkt, das auf einem Computer-nutzbaren Datenträger abgelegt ist, bestehend aus einem lesbaren Programm zur Veranlassung von Verarbeitungsmitteln, die in einem in der Gateway-Domain platzierten Computer angeordnet sind, die Ausführung der Schritte des Verfahrens nach einem der Ansprüche 1 bis 4 zu steuern, welches Verfahren mittels einer mobilen Vorrichtung (104) für eine digitale Signatur durchgeführt wird, welche Signatur von der mobilen Vorrichtung (104) über ein mobiles Zugangsnetzwerk (108), ein drahtloses öffentliches Netzwerk-Gateway (110) und ein öffentliches Netzwerk (106) einem Empfänger (102) übermittelt werden soll, welches Verfahren folgende Schritte umfasst,
- Erzeugen (305) eine digitalen Signatur innerhalb der mobilen Vorrichtung (104);
- Übertragen (306) der digitalen Signatur über das mobile Zugangsnetzwerk (108) zum Gateway (110);
- Abrufen (307) eines, der bestimmten mobilen Vorrichtung (104) zugeordneten Zertifikats in einem, dem Gateway (110) zugeordneten Agenten (116); welcher Agent (116) auf ein Verzeichnis (114) zugreift, das für die Speicherung von mobilen Vorrichtungen zugeordneten Zertifikaten geeignet ist;
- Anhängen (307) des genannten Zertifikats mittels des genannten Agenten (116) an die digitalen Signatur;
- Weiterleiten (308) der genannten digitalen Signatur und des angehängten Zertifikats über das öffentliche Netzwerk zum Empfänger (102).

7. Zertifikat-Agent (116) zur Unterstützung einer mobilen Vorrichtung (104) bei der Durchführung einer digitalen Signatur, die über ein mobiles Zugangsnetzwerk (108), ein drahtloses öffentliches Netzwerk-Gateway (110) und ein öffentliches Netzwerk an einen Empfänger (102) versendet werden soll, welcher Agent (116) dem drahtlosen öffentlichen Netzwerk-Gateway (110) zugeordnet ist und Mittel für das Empfangen der digitalen Signatur aufweist, die von der mobilen Vorrichtung (104) über das mobile Zugangsnetzwerk (108) zum Gateway (110) versendet wurde, **dadurch gekennzeichnet, dass** der Agent (116) des Weiteren umfasst:
- Mittel zum Zugreifen auf ein Verzeichnis (114), das für die Speicherung von mobilen Vorrichtungen zugeordneten Zertifikaten geeignet ist;
- Mittel zum Abrufen eines, der bestimmten mobilen Vorrichtung (104) zugeordneten Zertifikats aus dem genannten Verzeichnis (114);
- Mittel zum Anhängen des genannten Zertifikats an die digitale Unterschrift; und
- Mittel zum Weiterleiten der genannten digitalen Signatur und des angehängten Zertifikats über das Gateway (110) und über das öffentliche Netz (106) zum Empfänger (102).

8. Agent (116) nach Anspruch 7, **dadurch gekennzeichnet, dass** er umfasst:
- Mittel zum Identifizieren des, der bestimmten mobilen Vorrichtung (104) zugeordneten Zertifikats unter den gespeicherten Zertifikaten innerhalb des Verzeichnisses (114) mittels einer Identität der mobilen Vorrichtung (104) oder der Identität der Chipkarte.

9. Agent (116) nach einem der Ansprüche 7 bis 8, **dadurch gekennzeichnet, dass** er umfasst:
- Mittel zum Erzeugen eines PKCS#7-Nachrichtenformats, das das genannte Zertifikat und die digitale Signatur enthält, bevor sie zum Empfänger (102) weitergeleitet wird.

## Revendications

1. Procédé pour effectuer une signature numérique aux moyens d'un appareil mobile (104), laquelle signature est transférée depuis l'appareil mobile (104) via un réseau d'accès mobile (108), une passerelle de réseau public sans fil (110) et un réseau public (106) à un destinataire (102), le procédé comprenant les phases de:
- *créer* (305) une signature numérique dans l'appareil mobile (104);
- *transférer* (306) la signature numérique sur le réseau d'accès mobile (108), à la passerelle (110);
le procédé est **caractérisé en ce qu'**il comprend les phases suivantes :
- *récupérer* (307) un certificat associé à l'appareil mobile spécifique (104) dans un agent (116) associé à la passerelle (110); ledit agent (116) *accédant* à un répertoire (114) adapté pour stocker des certificats associés aux appareils mobiles;
- *joindre* (307) ledit certificat à la signature numérique aux moyens dudit agent (116);
- *envoyer* (308) ladite signature numérique et le certificat joint sur le réseau public au destinataire (102).

2. Procédé selon la revendication 1, **caractérisé en ce qu'**il comprend encore la phase à réaliser après la phase du transfert (306) de la signature numérique sur le réseau d'accès mobile (108) :
- la passerelle (110) *relayant* la signature numérique reçue à l'agent (116) associé à la passerelle (110).

3. Procédé selon la revendication 1, **caractérisé en ce que** la phase de récupération du certificat comprend encore la phase de :
- *identifier* le certificat associé à l'appareil mobile spécifique (104) parmi les certificats stockés dans ledit répertoire (114) aux moyens d'une identité de l'appareil mobile (104) ou l'identité de la carte à puces.

4. Procédé selon l'une quelconque des revendications 1 à 3, **caractérisé par** la phase de :
- l'agent (116) *créant* une structure de message PKCS#7 contenant ledit certificat et la signature numérique avant de l'envoyer au destinataire (102).

5. Un produit de programme informatique directement chargeable dans la mémoire interne d'un moyen de traitement dans un ordinateur placé dans un domaine de passerelle de réseau public sans fil, comprenant le moyen de code logiciel pour effectuer les phases du procédé de l'une quelconque des revendications 1 à 4, le procédé étant effectué pour une signature numérique aux moyens d'un appareil mobile (104), laquelle signature devant être transférée depuis l'appareil mobile (104) via un réseau d'accès mobile (108), une passerelle de réseau public sans fil (110) et un réseau public (106) au destinataire (102), le procédé comprenant les phases de :
- *créer* (305) une signature numérique dans l'appareil mobile (104);
- *transférer* (306) la signature numérique sur le réseau d'accès mobile (108), à la passerelle (110);
- *récupérer* (307) un certificat associé à l'appareil mobile spécifique (104) dans un agent (116) associé à la passerelle (110); ledit agent (116) *accédant* à un répertoire (114) adapté pour stocker des certificats associés aux appareils mobiles;
- *joindre* (307) ledit certificat à la signature numérique aux moyens dudit agent (116);
- *envoyer* (308) ladite signature numérique et le certificat joint sur le réseau public au destinataire (102).

6. Un produit de programme informatique mémorisé sur un support utilisable par ordinateur, comprenant un programme lisible faisant qu'un moyen de traitement dans un ordinateur placé dans le domaine de passerelle contrôle une exécution des phases de l'une quelconque des revendications 1 à 4, le procédé étant effectué pour une signature numérique aux moyens d'un appareil mobile (104), laquelle signature devant être transférée depuis l'appareil mobile (104) via un réseau d'accès mobile (108), une passerelle de réseau public sans fil (110) et un réseau public (106) au destinataire (102), le procédé comprenant les phases de :
- *créer* (305) une signature numérique dans l'appareil mobile (104);
- *transférer* (306) la signature numérique sur le réseau d'accès mobile (108), à la passerelle (110);
- *récupérer* (307) un certificat associé à l'appareil mobile spécifique (104) dans un agent (116) associé à la passerelle (110); ledit agent (116) *accédant* à un répertoire (114) adapté pour stocker des certificats associés aux appareils mobiles;
- *joindre* (307) ledit certificat à la signature numérique aux moyens dudit agent (116);
- *envoyer* (308) ladite signature numérique et le certificat joint sur le réseau public au destinataire (102).

7. Un agent de certificat (116) pour aider un appareil mobile (104) à réaliser une signature numérique devant être envoyée au destinataire (102), via un réseau d'accès mobile (108), une passerelle de réseau public sans fil (110) et un réseau public, l'agent (116) étant associé à la passerelle de réseau public sans fil (110) et comprenant des moyens pour recevoir la signature numérique envoyée depuis l'appareil mobile (104) sur le réseau d'accès mobile (108) à la passerelle (110), **caractérisé en que** l'agent comprend encore :
- des moyens pour accéder à un répertoire (114) adapté pour stocker des certificats associés aux appareils mobiles;
- des moyens pour récupérer un certificat associé à l'appareil mobile spécifique (104) depuis ledit répertoire (114);
- des moyens pour joindre ledit certificat à la signature numérique; et
- des moyens pour envoyer ladite signature numérique et le certificat joint via la passerelle (110) et sur le réseau public (106) au destinataire (102).

8. L'agent (116) selon la revendication 7, **caractérisé en qu'**il comprend;
- des moyens pour identifier le certificat associé à l'appareil mobile spécifique (104) parmi les certificats stockés dans ledit répertoire (114) aux moyens d'une identité de l'appareil mobile (104) ou l'identité de la carte à puces.

9. L'agent (116) selon l'une quelconque des revendications 7 à 8, **caractérisé en qu'**il comprend;
- des moyens pour créer une structure de message PKCS#7 contenant ledit certificat et la signature numérique avant de l'envoyer au destinataire (102).
